# EUROPÄISCHE PATENTSCHRIFT

(11) **EP 3 181 875 B1**
(45) Veröffentlichungstag und Bekanntmachung des Hinweises auf die Patenterteilung: **06.05.2020**
(21) Anmeldenummer: 16194854.2
(22) Anmeldetag: 20.10.2016
(51) Int. Cl.: F02D 41/14, F02D 41/18

(54) **REFERENZBASIERTES SAUGROHRTEMPERATURMODELL**
REFERENCE BASED INTAKE PIPE TEMPERATURE MODEL
MODÈLE DE TEMPÉRATURE DE RÉFÉRENCE POUR TUBE D'ADMISSION

(30) Priorität: 18.12.2015 DE 102015225916
(43) Veröffentlichungstag der Anmeldung: 21.06.2017
(73) Patentinhaber: VOLKSWAGEN AKTIENGESELLSCHAFT, 38440 Wolfsburg (DE)
(72) Erfinder: Horn, Hauke, 31228 Peine (DE); Schulz, Michael, 38518 Gifhorn (DE); Mannigel, Dieter, 38116 Braunschweig (DE)

(56) Entgegenhaltungen:
- DE-A1- 10 111 774
- DE-A1- 10 328 056
- Lars Eriksson, Lars Nielsen: "Modeling and Control od Engines and Drivelines", 1. Februar 2015 (2015-02-01), Wiley, Chennai, India, XP002769266, ISBN: 978-1-118-47999-5 Seiten 216-225, * Seite 216 - Seite 225 *

## Beschreibung

Die vorliegende Erfindung betrifft ein Verfahren sowie eine entsprechende Vorrichtung zur Bestimmung der Austrittstemperatur eines Ladegases aus einem Turbolader eines Kraftfahrzeugs, d.h. der Lufttemperatur nach dem Verdichter des Abgasturboladers.

Abgasturbolader dienen der Leistungs- oder Effizienzsteigerung von Verbrennungsmotoren und werden beispielsweise bei Kraftfahrzeugen eingesetzt. Ein Abgasturbolader besteht aus zwei Strömungsmaschinen, nämlich einer Turbine und einem Verdichter, die auf einer gemeinsamen Welle, der sogenannten Turboladerwelle, angebracht sind. Die Turbine nutzt die im Abgas enthaltene Energie zum Antrieb des Verdichters, der wiederum Frischluft ansaugt und vorverdichtete Luft in die Zylinder oder Brennräume des jeweiligen Verbrennungsmotors drückt. Ein Abgasturbolader ist durch den Luft- und Abgasmassenstrom strömungstechnisch mit dem Verbrennungsmotor des Kraftfahrzeugs gekoppelt.

Aus der deutschen Offenlegungsschrift DE 101 11 774 A1 ist ein Verfahren sowie eine entsprechende Vorrichtung bekannt, um auf möglichst einfache Art und Weise die Luftaustrittstemperatur des Verdichters eines Abgasturboladers eines Kraftfahrzeugs zu bestimmen. Dabei wird die Luftaustrittstemperatur aus der Drehzahl des Verdichters und der Lufteintrittstemperatur des Verdichters abgeleitet, wobei insbesondere ein drehzahlabhängiges Verdichterwirkungsgradkennfeld zum Einsatz kommt.

Techniken, die auf einem Verdichterwirkungsgradkennfeld oder entsprechenden Modellen beruhen haben allerdings den Nachteil, dass sie von der Güte des verwendeten Wirkungsgradmodells abhängen. Werden einfache Wirkungsgradmodelle verwendet, kann dies Auswirkungen auf die Modellierungsgüte z.B. bei Dieselpartikelfilter-Regeneration und MotorKaltlauf haben. Auch kann ein Abgastemperatureinfluss für ein stationäres Wirkungsgradkennfeld die Modellierungsgüte beeinflussen, was in Modellierungsabweichungen in der Dynamik resultieren kann.

Ausgehend von diesen bekannten Lösungen liegt eine Aufgabe der Erfindung darin, alternative und verbesserte Verfahren und Vorrichtungen zum Bestimmen einer Ladegasaustrittstemperatur eines Ladegases aus einem Abgasturbolader bereitzustellen.

Diese Aufgabe wird durch das erfindungsgemäße Verfahren nach Anspruch 1 bzw. die erfindungsgemäße Vorrichtung nach Anspruch 10 gelöst. Weitere vorteilhafte Ausgestaltungen der Erfindung ergeben sich aus den Unteransprüchen und der folgenden Beschreibung bevorzugter Ausführungsbeispiele der vorliegenden Erfindung.

Bei dem erfindungsgemäßen Verfahren zum Bestimmen einer Ladegasaustrittstemperatur eines Ladegases aus einem Abgasturbolader wird die Ladegasaustrittstemperatur unter Berücksichtigung eines Ladegasaustrittstemperatur-Korrekturwertes ermittelt, wobei der Ladegasaustrittstemperatur-Korrekturwert auf einer Abgastemperaturabweichung zwischen einer Abgasreferenztemperatur und einer Abgasisttemperatur beruht. Bei der genannten Abgasisttemperatur kann es sich beispielsweise um die aktuell vor dem Verdichter eines Abgasturboladers gemessene Abgastemperatur handeln. Da die mittels des Verfahrens ermittelte Ladegasaustrittstemperatur im Wesentlichen der Saugrohrtemperatur entspricht, kann das Verfahren bei Verbrennungsmotoren mit geregelter Saugrohrtemperatur vorteilhaft eingesetzt werden. Durch das erfindungsgemäße Verfahren kann insbesondere die Ladegasaustrittstemperatur ermittelt werden, ohne dass hierfür ein Temperatursensor vor dem Ladeluftkühler erforderlich ist.

Gemäß einem Ausführungsbeispiel des erfindungsgemäßen Verfahrens wird die Abgasreferenztemperatur basierend auf einem Verdichtungsverhältnis des Ladegases und einem reduzierten Massenstrom des Ladegases, vorzugsweise mittels eines Referenzkennfeldes, ermittelt. Dieses Kennfeld für die Modellierung der Lufttemperatur nach Verdichter kann beispielsweise durch Ermittlung einer Referenzbedatung für die Abgastemperatur am Prüfstand erhalten werden. Da das Modell am Prüfstand bedatet werden kann, ergibt sich ein einfaches und solides Modell.

Gemäß einem Ausführungsbeispiel des erfindungsgemäßen Verfahrens wird der Ladegasaustrittstemperatur-Korrekturwert aus der Abgastemperaturabweichung und einem reduzierten Massenstrom des Ladegases, vorzugsweise mittels eines Kennfeldes, ermittelt. Dies hat den Vorteil, dass der reduzierte Massenstrom üblicherweise der Motorsteuerung bekannt ist und damit leicht abgerufen werden kann.

Gemäß einem Ausführungsbeispiel des erfindungsgemäßen Verfahrens wird insbesondere eine referenztemperatur-bezogene Ladegasaustrittstemperatur auf Grundlage einer Ladegaseintrittstemperatur bestimmt und diese referenztemperaturbezogene Ladegasaustrittstemperatur wird durch den Ladegasaustrittstemperatur-Korrekturwert korrigiert, um die Ladegasaustrittstemperatur zu erhalten. Die Ladegaseintrittstemperatur entspricht beispielsweise einer Lufttemperatur vor dem Verdichter, was den Vorteil hat, dass diese mittels eines Sensors gemessen werden kann.

Gemäß einem Ausführungsbeispiel des erfindungsgemäßen Verfahrens wird die referenztemperaturbezogene Ladegasaustrittstemperatur bestimmt, indem die Ladegaseintrittstemperatur mit einem Verdichtungstemperaturfaktor multipliziert wird. Mittels dieses Verdichtungstemperaturfaktors kann somit aus der Ladegaseintrittstemperatur eine Verdichtungstemperatur ermittelt werden.

Der Verdichtungstemperaturfaktor kann beispielsweise basierend auf einem reduzierten Massenstrom des Ladegases und einem Verdichtungsverhältnis, vorzugsweise mittels eines Kennfeldes, bestimmt werden. Dies hat den Vorteil, dass das Kennfeld in einer Motorsteuerung hinterlegt werden kann und dass der reduzierte Massenstrom üblicherweise der Motorsteuerung bekannt ist und damit leicht abgerufen werden kann.

Das Verdichtungsverhältnis kann hierbei insbesondere ein Verdichtungsverhältnis des Ladegases zwischen einem Eintrittsdruck in und einem Austrittsdruck aus dem Verdichtungsabschnitt sein.

Gemäß einem Ausführungsbeispiel des erfindungsgemäßen Verfahrens wird die Abgasreferenztemperatur ferner tiefpassgefiltert, bevor die Abgastemperaturabweichung bestimmt wird. Diese Tiefpassfilterung der Abgasreferenztemperatur kann vom reduzierten Massenstrom abhängig gemacht werden.

Ferner kann auch die ermittelte Ladegasaustrittstemperatur tiefpassgefiltert werden, wobei auch diese Tiefpassfilterung der Ladegasaustrittstemperatur vom reduzierten Massenstrom abhängig gemacht werden kann.

Die Erfindung betrifft auch eine Vorrichtung zum Bestimmen einer Ladegasaustrittstemperatur eines Ladegases aus einem Abgasturbolader, wobei die Vorrichtung ausgebildet ist, die oben beschriebenen Verfahren auszuführen. Bei der Vorrichtung kann es sich beispielsweise um eine Motorsteuerung handeln, in der Software vorgesehen ist, welche die oben beschriebenen Verfahren implementiert.

Ausführungsbeispiele der Erfindung werden nun beispielhaft und unter Bezugnahme auf die beigefügte Zeichnungen beschrieben, in denen:
Fig. 1 schematisch einen Verbrennungsmotor zeigt, der mit einem Abgasturbolader gekoppelt ist;
Fig. 2 schematisch ein Ausführungsbeispiel eines erfindungsgemäßen Verfahrens zum Bestimmen einer Ladegasaustrittstemperatur eines Ladegases aus einem Abgasturbolader zeigt; und
Fig. 3 schematisch eine beispielhafte Motorsteuerung zeigt, die dazu ausgelegt ist, die hier beschriebenen Verfahren zum Bestimmen einer Ladegasaustrittstemperatur eines Ladegases aus einem Abgasturbolader auszuführen.

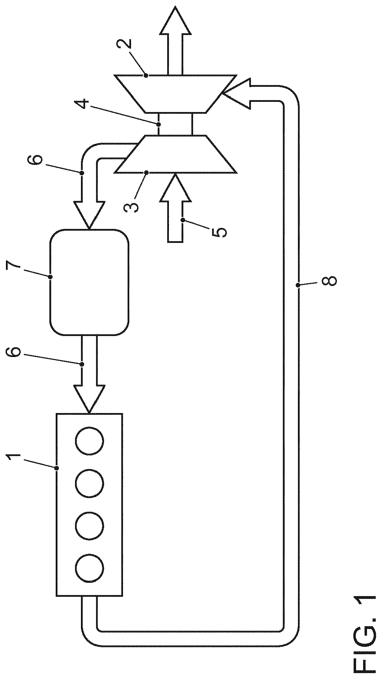

In Fig. 1 ist ein Verbrennungsmotor 1 dargestellt. Der Verbrennungsmotor 1 ist mit einem Abgasturbolader gekoppelt, welcher eine Turbine 2 und einen Verdichter 3 umfasst, wobei die Turbine 2 und der Verdichter 3 auf einer gemeinsamen Welle, der sogenannten Turboladerwelle 4, angebracht sind. Die Turbine 2 nutzt die im Abgas des Verbrennungsmotors 1 enthaltene Energie zum Antrieb des Verdichters 3, welcher über ein Luftfilter (in Fig. 1 nicht gezeigt) Frischluft 5 ansaugt und vorverdichtete Luft 6 in die einzelnen Zylinder des Verbrennungsmotors 1 drückt. Der durch die Turbine 2, den Verdichter 3 und die Turboladerwelle 4 gebildete Abgasturbolader ist nur durch den Luft- und Abgasmassenstrom strömungstechnisch mit dem Verbrennungsmotor 1 gekoppelt.

Die von dem Verdichter 3 angesaugte und vorverdichtete Luft 6 wird über einen Ladeluftkühler 7, welcher die thermische Belastung des Verbrennungsmotors 1, die Abgastemperatur und damit die NOx-Emission sowie den Kraftstoffverbrauch reduziert den einzelnen Brennräumen des Verbrennungsmotors 1 zugeführt. Ein Teil des in den Brennräumen des Verbrennungsmotors 1 erzeugten Abgases wird der Turbine 2 über eine Abgasrückführung 8 zugeführt. Der Turbine 2 ist in Abgasströmungsrichtung eine Abgasanlage (in Fig. 1 nicht gezeigt) des Kraftfahrzeugs nachgeschaltet, welche die Schadstoffanteile der beim Betrieb des Verbrennungsmotors 1 entstehenden Abgase abbaut und die verbleibenden Abgase so geräuscharm wie möglich ableitet.

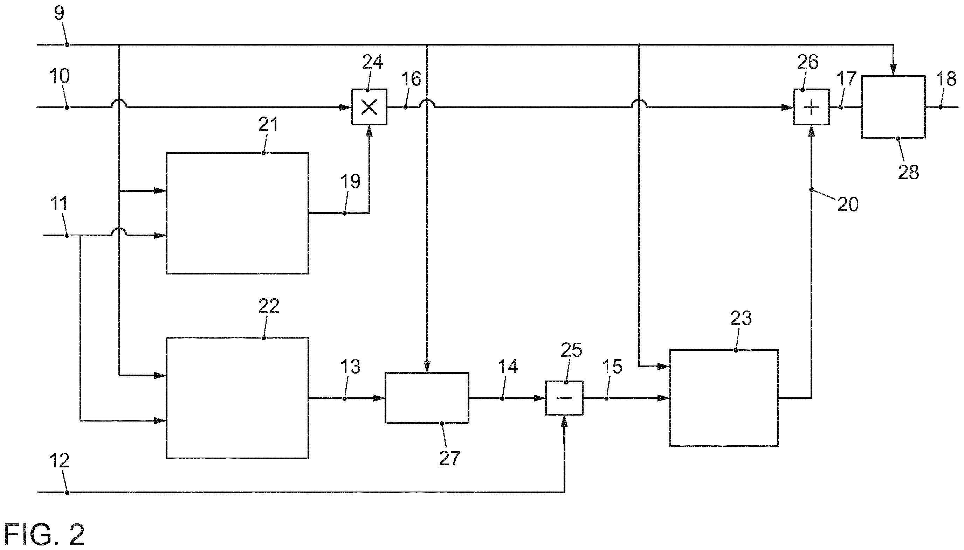

Fig. 2 zeigt schematisch ein Ausführungsbeispiel eines erfindungsgemäßen Verfahrens zum Bestimmen einer Ladegasaustrittstemperatur eines Ladegases aus einem Abgasturbolader.

In diesem Ausführungsbeispiel wird mittels eines Referenzkennfeldes 22 aus einem Verdichtungsverhältnis 11 des Abgasturboladers und einem reduzierten Massenstrom 9 des Turboladers eine Abgasreferenztemperatur 13 ermittelt. Das Referenzkennfeld 22 für die Ermittlung der Abgasreferenztemperatur 13 ist in der Motorsteuerung hinterlegt und wird mittels Massenstrom- sowie Ladedruckvariation in einer Normalbetriebsart am Prüfstand ermittelt. Hierfür werden in einem Stufenprogramm stationäre Punkte in verschiedenen Last-/Drehzahlwerten angefahren und am Ende der Stufe der Temperaturwert gemessen. Die mittels dem Kennfeld 22 ermittelte Abgasreferenztemperatur 13 bezieht sich dabei auf die Abgastemperatur an der Turbine, wie sie am Prüfstand für die entsprechenden Referenzgrößen Verdichtungsverhältnis und reduzierter Massenstrom ermittelt wird. Das Kennfeld 22 referenziert sich auf identische Punkte zu Kennfeld 21 und wird zeitgleich gemessen. Daher kann das Kennfeld 22 als Referenzkennfeld zu Kennfeld 21 bezeichnet werden.

Das Verdichtungsverhältnis 11 ist gemäß diesem Ausführungsbeispiel ein Verdichtungsverhältnis des Ladegases zwischen einem Eintrittsdruck in und einem Austrittsdruck aus dem Verdichtungsabschnitt des Abgasturboladers. Für die Zwecke dieses Ausführungsbeispiels wird davon ausgegangen, dass der reduzierte Massenstrom 9 und das Verdichtungsverhältnis 11 der Motorsteuerung auf Grundlage dem Fachmann bekannter Mess- und Modellierungstechniken ermittelt werden, in der Motorsteuerung vorliegen und dort abgerufen werden können.

Die mittels dem Kennfeld 22 gewonnene Abgasreferenztemperatur 13 wird schließlich mittels eines Tiefpassfilters 27 zwecks Abbildung der Wärmekapzität des Gases sowie des Ansprechverhaltens des Sensors tiefpassgefiltert, wobei der reduzierte Massenstrom 9 als Filterparameter in die Tiefpassfilterung eingeht. Die Filterzeitkonstante kann mittels Temperatursprungversuchen am Prüfstand ermittelt werden und als Kennlinie in Abhängigkeit des reduzierten Massenstroms abgelegt werden. Die Filterzeit spiegelt in erster Linie den thermischen Übergang zum (modellierten) Temperatursensor wider. Da ein thermischer Übergang je nach Strömungsgeschwindigkeit (laminar oder turbulent) im Wärmeübergangskoeffizienten variiert, kann die Filterzeitkonstante massenstromabhängig als Kennlinie hinterlegt werden.

Durch diese Tiefpassfilterung 27 wird aus der Abgasreferenztemperatur 13 eine entsprechende tiefpassgefilterte Abgasreferenztemperatur 14 erhalten. Die tiefpassgefilterte Abgasreferenztemperatur 14 und die Abgasisttemperatur 12 besitzen nun idealerweise dieselben dynamischen Eigenschaften, weichen aber in einigen konstanten Motorbetriebspunkten (zum Beispiel in Regenerationbetriebsarten oder dem Motorkaltlauf) voneinander ab.

In diesem Ausführungsbeispiel wird ferner mittels eines Kennfeldes 21 aus dem Verdichtungsverhältnis 11 und dem reduzierten Massenstrom 9 ein Verdichtungstemperaturfaktor 19 ermittelt. Das Kennfeld 21 für die Ermittlung des Verdichtungstemperaturfaktors 19 ist ebenfalls in der Motorsteuerung hinterlegt und wird zeitgleich zu Kennfeld 22 im Stufenprogramm gemessen. Da der Faktor nicht direkt gemessen werden kann, werden die Temperaturen 10 und 18 gemessen und der entsprechende Temperaturerhöhungsfaktor zurückgerechnet.

Alternativ zu Kennfeld 22 kann ein Modell basierend auf dem Verdichterwirkungsgradkennfeld (vgl. deutsche Offenlegungsschrift DE 101 11 774 A1) berechnet werden. Hierbei wird der Verdichterwirkungsgrad aus den gemessenen Temperaturen 10 und 18 für die entsprechenden Gasmassenströme 9 und Verdichtungsverhältnisse 11 zurückgerechnet.

Der Verdichtungstemperaturfaktor 19 wird in einem Multiplikationsschritt 24 mit einer Ladegaseintrittstemperatur 10 multipliziert, um aus der Ladegaseintrittstemperatur 10 eine referenztemperatur-bezogene Ladegasaustrittstemperatur 16 (Verdichtungstemperatur) zu erhalten. Für die Zwecke dieses Ausführungsbeispiels wird davon ausgegangen, dass die Ladegaseintrittstemperatur 10, welche die Temperatur der Ladeluft vor dem Verdichter angibt, der Motorsteuerung auf Grundlage dem Fachmann bekannter Mess- und ggf. Modellierungstechniken ermittelt wird, in der Motorsteuerung vorliegt und dort abgerufen werden kann.

In diesem Ausführungsbeispiel wird ferner in einem Schritt 25 eine Differenz zwischen der tiefpassgefilterten Abgasreferenztemperatur 14 und einer Abgasisttemperatur 12 gebildet, um eine Abgastemperaturabweichung 15 zu ermitteln. Die Differenz kann beispielsweise durch Subtraktion der Abgasreferenztemperatur 14 von der Abgasisttemperatur 12 gebildet werden, oder umgekehrt. In alternativen Ausführungsformen kann die Differenzbildung auch lediglich den Absolutwert der Subtraktion ausgeben. Für die Zwecke dieses Ausführungsbeispiels wird davon ausgegangen, dass die Abgasisttemperatur 12 der Motorsteuerung bekannt ist und damit von der Motorsteuerung abgerufen werden kann. Sie kann beispielsweise mittels eines Sensors ermittelt werden, der auf dem Fachmann bekannte Weise die aktuell vor dem Verdichter eines Abgasturboladers gemessene Abgastemperatur misst.

Aus der Abgastemperaturabweichung 15 wird ferner mittels eines Kennfelds 23 ein Ladegasaustrittstemperatur-Korrekturwert 20 ermittelt. Das Kennfeld 23 für die Ermittlung des Ladegasaustrittstemperatur-Korrekturwerts 20 berücksichtigt als weitere Eingangsgröße den reduzierter Massenstrom 9. Das Kennfeld 23, das Abweichungen der Abgasisttemperatur 12 von der (tiefpassgefilterten) Abgasisttemperatur 15 in einen Ladegasaustrittstemperatur-Korrekturwert 20 übersetzt, wird am Prüfstand ermittelt und ist, wie die Kennfelder 21 und 22 in der Motorsteuerung hinterlegt.

Der auf diese Weise ermittelte Ladegasaustrittstemperatur-Korrekturwert 20 wird in einem Schritt 26 auf die referenztemperatur-bezogene Ladegasaustrittstemperatur 16 addiert, um daraus die Ladegasaustrittstemperatur 17 zu erhalten. Der Ladegasaustrittstemperatur-Korrekturwert 20 wirkt somit als Temperatur-Offset für die Ladegasaustrittstemperatur.

Die auf diese Weise ermittelte Ladegasaustrittstemperatur 17 wird in diesem Ausführungsbeispiel ferner mit einem Tiefpassfilter 28 tiefpassgefiltert, um eine tiefpassgefilterte Ladegasaustrittstemperatur 18 zu erhalten, welche von dem Verfahren als Ergebnis der Bestimmung der Ladegasaustrittstemperatur ausgegeben wird. Auch hier geht - aus denselben Gründen wie bei der Tiefpassfilterung 27 der Abgasreferenztemperatur- wieder der reduzierte Massenstrom 9 als Parameter in die Tiefpassfilterung 28 ein. Die Filterzeitkonstante des Tiefpassfilters 28 kann - wie im Falle des Tiefpassfilters 27 - mittels Temperatursprungversuchen am Prüfstand ermittelt werden und als Kennlinie in Abhängigkeit des reduzierten Massenstroms in der Motorsteuerung abgelegt werden. Die Filterzeitkonstante des Tiefpassfilters 28 kann vom Fachmann beispielsweise so ausgelegt werden, dass sie dem gewünschten Saugrohrtemperaturmodell entspricht und für einen jeweiligen Massenstrom das entsprechende am Prüfstand ermittelte zeitliche Verhalten modelliert. So kann der Tiefpassfilter durch geeignete Wahl der Zeitkonstante beispielsweise so ausgelegt werden, dass er den Übergang von einer (modellierten) Druckrohrtemperatur in der Rohrmitte auf eine Druckrohrtemperatur am (modellierten) Sensor abbildet.

In diesem Ausführungsbeispiel wird folglich eine Ladegasaustrittstemperatur 17 bzw. eine tiefpassgefilterte Ladegasaustrittstemperatur 18 unter Berücksichtigung eines Ladegasaustrittstemperatur-Korrekturwerts 20 ermittelt, der auf einer Abgastemperaturabweichung 15 zwischen einer Abgasreferenztemperatur 13 (hier insbesondere einer tiefpassgefilterten Abgasreferenztemperatur 14) und einer Abgasisttemperatur 12 beruht.

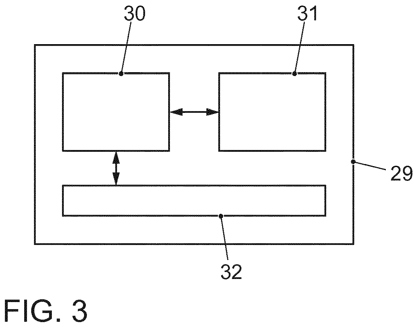

Fig. 3 zeigt schematisch eine beispielhafte Motorsteuerung 29, die dazu ausgelegt ist, die oben beschriebenen Verfahren auszuführen. Die Motorsteuerung 29 umfasst einen Prozessor 30, einen Speicher 31 und eine Schnittstelle 32. Der Speicher 31 dient dazu, Daten wie beispielsweise die Kennfelder 21, 22 und 23 zu speichern. Ferner ist in dem Speicher 31 auch Software hinterlegt, die dazu ausgelegt ist, die oben beschriebenen Verfahren auszuführen. Der Prozessor 30 ist dazu ausgelegt, Programminstruktionen der Software auszuführen. Die Schnittstelle 32 ist ferner dazu ausgelegt, Daten zu empfangen und auszusenden. Es kann sich beispielsweise um eine Schnittstelle zu einem CAN-Bus einen Kraftfahrzeugs handeln, über den die Motorsteuerung Messwerte von Sensoren, wie beispielsweise die Ladegaseintrittstemperatur 10 und dergleichen empfängt und Steuerbefehle, beispielsweise Steuerbefehle für eine Regelung der Saugrohrtemperatur, aussendet.

Die vorliegende Erfindung wurde anhand der aufgezeigten Ausführungsbeispiele beschrieben. Der Fachmann wird allerdings erkennen, dass auch alternative Ausführungsformen der Erfindung existieren. So werden beispielsweise in dem Verfahren der Fig. 2 Tiefpassfilter 27, 28 eingesetzt, die in alternative Ausführungsformen durch andere Filter ersetzt werden können oder auch weggelassen werden können.

### Bezugszeichenliste

- 1: Verbrennungsmotor
- 2: Turbine
- 3: Verdichter
- 4: Turboladerwelle
- 5: Frischluft
- 6: vorverdichtete Luft
- 7: Ladeluftkühler
- 8: Abgasrückführung
- 9: reduzierter Massenstrom
- 10: Ladegaseintrittstemperatur (vor Verdichter)
- 11: Verdichtungsverhältnis
- 12: Abgastemperatur (an Turbine)
- 13: Abgasreferenztemperatur (an Turbine)
- 14: tiefpassgefilterte Abgasreferenztemperatur
- 15: Abgastemperaturabweichung
- 16: referenztemperatur-bezogene Ladegasaustrittstemperatur (Verdichtungstemperatur)
- 17: Ladegasaustrittstemperatur
- 18: tiefpassgefilterte Ladegasaustrittstemperatur
- 19: Verdichtungstemperaturfaktor
- 20: Ladegasaustrittstemperatur-Korrekturwert
- 21: Kennfeld (für Ermittlung des Verdichtungstemperaturfaktors)
- 22: Referenzkennfeld (für Ermittlung der Abgasreferenztemperatur)
- 23: Kennfeld (für Ermittlung des Ladegasaustrittstemperatur-Korrekturwerts)
- 24: Multiplikation
- 25: Subtraktion
- 26: Addition
- 27: Tiefpassfilter
- 28: Tiefpassfilter
- 29: Motorsteuerung
- 30: Prozessor
- 31: Speicher
- 32: Schnittstelle

## Patentansprüche

1. Verfahren zum Bestimmen einer Ladegasaustrittstemperatur (17; 18) eines Ladegases aus einem Abgasturbolader (2, 3, 4), wobei die Ladegasaustrittstemperatur (17; 18) unter Berücksichtigung eines Ladegasaustrittstemperatur-Korrekturwertes (20) ermittelt wird, der auf einer Abgastemperaturabweichung (15) zwischen einer Abgasreferenztemperatur (13; 14) und einer Abgasisttemperatur (12) beruht, wobei die Abgasreferenztemperatur (13; 14) eine vorgegebene Größe ist, die sich auf die Abgastemperatur an der Turbine bezieht, wie sie am Prüfstand für die entsprechenden Referenzgrößen Verdichtungsverhältnis und Reduzierter Massenstrom ermittelt wird.

2. Verfahren gemäß Anspruch 1, wobei die Abgasreferenztemperatur (13) basierend auf einem Verdichtungsverhältnis (11) des Ladegases und einem reduzierten Massenstrom (9) des Ladegases, vorzugsweise mittels eines Referenzkennfeldes (22), ermittelt wird.

3. Verfahren gemäß Anspruch 1 oder 2, wobei der Ladegasaustrittstemperatur-Korrekturwert (20) aus der Abgastemperaturabweichung (15) und einem reduzierten Massenstrom (9) des Ladegases, vorzugsweise mittels eines Kennfeldes (23), ermittelt wird.

4. Verfahren gemäß einem der vorstehenden Ansprüche, bei dem ferner eine referenztemperatur-bezogene Ladegasaustrittstemperatur (16) auf Grundlage einer Ladegaseintrittstemperatur (10) bestimmt wird und diese referenztemperaturbezogene Ladegasaustrittstemperatur (16) durch den Ladegasaustrittstemperatur-Korrekturwert (20) korrigiert wird, um die Ladegasaustrittstemperatur (17; 18) zu erhalten.

5. Verfahren nach Anspruch 4, wobei die referenztemperaturbezogene Ladegasaustrittstemperatur (16) bestimmt wird, indem die Ladegaseintrittstemperatur (10) mit einem Verdichtungstemperaturfaktor (19) multipliziert wird.

6. Verfahren gemäß Anspruch 5, wobei der Verdichtungstemperaturfaktor (19) basierend auf einem reduzierten Massenstrom (9) des Ladegases und einem Verdichtungsverhältnis (11), vorzugsweise mittels eines Kennfeldes (21), bestimmt wird.

7. Verfahren gemäß dem vorangehenden Anspruch, wobei das Verdichtungsverhältnis (11) ein Verdichtungsverhältnis des Ladegases zwischen einem Eintrittsdruck in und einem Austrittsdruck aus dem Verdichtungsabschnitt ist.

8. Verfahren gemäß einem der vorangehenden Ansprüche, wobei die Abgasreferenztemperatur (13) tiefpassgefiltert wird, bevor die Abgastemperaturabweichung (15) bestimmt wird, um eine tiefpassgefilterte Abgasreferenztemperatur (14) zu erhalten.

9. Verfahren gemäß einem der vorangehenden Ansprüche, wobei die ermittelte Ladegasaustrittstemperatur (17) tiefpassgefiltert wird, um eine tiefpassgefilterte Ladegasaustrittstemperatur (18) zu erhalten.

10. Vorrichtung zum Bestimmen einer Ladegasaustrittstemperatur (17; 18) eines Ladegases aus einem Abgasturbolader (2, 3, 4), wobei die Vorrichtung dazu ausgebildet ist, das Verfahren gemäß einem der vorangehenden Ansprüche auszuführen.

## Claims

1. Method for determining a charging gas outlet temperature (17; 18) of a charging gas from an exhaust gas turbocharger (2, 3, 4), wherein the charging gas outlet temperature (17; 18) is determined taking into account a charging gas outlet temperature correction value (20), which is based on an exhaust gas temperature deviation (15) between an exhaust gas reference temperature (13; 14) and an exhaust gas actual temperature (12), wherein the exhaust gas reference temperature (13; 14) is a prespecified variable, which refers to the exhaust gas temperature at the turbine as determined on the test bench for the corresponding reference variables of compression ratio and reduced mass flow.

2. Method according to claim 1, wherein the exhaust gas reference temperature (13) is determined on the basis of a compression ratio (11) of the charging gas and a reduced mass flow (9) of the charging gas, preferably by means of a reference characteristic diagram (22).

3. Method according to claim 1 or 2, wherein the charging gas outlet temperature correction value (20) is determined from the exhaust gas temperature deviation (15) and a reduced mass flow (9) of the charging gas, preferably by means of a characteristic diagram (23).

4. Method according to any one of the preceding claims, furthermore comprising determining a reference temperature-related charging gas outlet temperature (16) based on a charging gas inlet temperature (10) and correcting this reference temperature-related charging gas outlet temperature (16) by the charging gas outlet temperature correction value (20) in order to obtain the charging gas outlet temperature (17; 18).

5. Method according to claim 4, wherein the reference temperature-related charging gas outlet temperature (16) is determined by multiplying the charging gas inlet temperature (10) by a compression temperature factor (19).

6. Method according to claim 5, wherein the compression temperature factor (19) is determined on the basis of a reduced mass flow (9) of the charging gas and a compression ratio (11), preferably by means of a characteristic diagram (21).

7. Method according to the preceding claim, wherein the compression ratio (11) is a compression ratio of the charging gas between an inlet pressure into and an outlet pressure out of the compression section.

8. Method according to any one of the preceding claims, wherein the exhaust gas reference temperature (13) is low-pass-filtered before the exhaust gas temperature deviation (15) is determined in order to obtain a low-pass-filtered exhaust gas reference temperature (14).

9. Method according to any one of the preceding claims, wherein the determined charging gas outlet temperature (17) is low-pass-filtered in order to obtain a low-pass-filtered charging gas outlet temperature (18).

10. Device for determining a charging gas outlet temperature (17; 18) of a charging gas from an exhaust gas turbocharger (2, 3, 4), wherein the device is designed to perform the method according to any one of the preceding claims.

## Revendications

1. Procédé de détermination d'une température de sortie de gaz de charge (17 ; 18) d'un gaz de charge sortant d'un turbocompresseur (2, 3, 4) à gaz d'échappement, dans lequel la température de sortie de gaz de charge (17 ; 18) est déterminée compte tenu d'une valeur de correction (20) de température de sortie de gaz de charge, qui est basée sur un écart de température de gaz d'échappement (15) entre une température de référence de gaz d'échappement (13 ; 14) et une température réelle de gaz d'échappement (12), la température de référence de gaz d'échappement (13 ; 14) étant une valeur prédéfinie, qui se réfère à la température de gaz d'échappement au niveau de la turbine, telle qu'elle est déterminée sur un banc d'essai pour les valeurs de référence correspondantes de rapport de compression et de débit massique réduit.

2. Procédé selon la revendication 1, dans lequel la température de référence de gaz d'échappement (13) est déterminée sur la base d'un rapport de compression (11) du gaz de charge et d'un débit massique réduit (9) du gaz de charge, de préférence au moyen d'une cartographie de référence (22).

3. Procédé selon la revendication 1 ou 2, dans lequel la valeur de correction de température de sortie de gaz de charge (20) est déterminée à partir de l'écart de température de gaz d'échappement (15) et d'un débit massique réduit (9) du gaz de charge, de préférence au moyen d'une cartographie caractéristique (23).

4. Procédé selon l'une quelconque des revendications précédentes, dans lequel une température de sortie de gaz de charge (16) rapportée à la température de référence est en outre déterminée sur la base d'une température d'entrée de gaz de charge (10) et cette température de sortie de gaz de charge (16) rapportée à la température de référence est corrigée par la valeur de correction de température de sortie de gaz de charge (20), afin d'obtenir la température de sortie de gaz de charge (17 ; 18).

5. Procédé selon la revendication 4, dans lequel la température de sortie de gaz de charge (16) rapportée à la température de référence est déterminée en ce que la température d'entrée du gaz de charge (10) est multipliée par un facteur de température de compression (19).

6. Procédé selon la revendication 5, dans lequel le facteur de température de compression (19) est déterminé sur la base d'un débit massique réduit (9) du gaz de charge et d'un rapport de compression (11), de préférence au moyen d'une cartographie (21).

7. Procédé selon la revendication précédente, dans lequel le rapport de compression (11) est un rapport de compression du gaz de charge entre une pression d'entrée et une pression de sortie respectivement à l'entrée et à la sortie de la section de compression.

8. Procédé selon l'une quelconque des revendications précédentes, dans lequel la température de référence de gaz d'échappement (13) est filtrée en passe-bas, avant que l'écart de température de gaz d'échappement (15) ne soit déterminé, afin d'obtenir une température de référence de gaz d'échappement (14) filtrée en passe-bas.

9. Procédé selon l'une quelconque des revendications précédentes, dans lequel la température de sortie de gaz de charge (17) est filtrée en passe-bas afin d'obtenir une température de sortie de gaz de charge (18) filtrée en passe-bas.

10. Dispositif de détermination d'une température de sortie de gaz de charge (17 ; 18) d'un gaz de charge sortant d'un turbocompresseur (2, 3, 4) à gaz d'échappement, le dispositif étant conçu pour exécuter le procédé selon l'une quelconque des revendications précédentes.
